# EUROPÄISCHE PATENTSCHRIFT

(11) **EP 2 748 459 B1**
(45) Veröffentlichungstag und Bekanntmachung des Hinweises auf die Patenterteilung: **21.03.2018**
(21) Anmeldenummer: 12740336.8
(22) Anmeldetag: 19.07.2012
(51) Int. Cl.: F03B 17/06, F03D 3/04

(54) **STRÖMUNGSKONVERTER**
FLOW CONVERTER
CONVERTISSEUR D'ÉCOULEMENT

(30) Priorität: 23.08.2011 DE 102011081378
(43) Veröffentlichungstag der Anmeldung: 02.07.2014
(73) Patentinhaber: Environeers Energy GmbH, 88048 Friedrichshafen (DE)
(72) Erfinder: TAUSCH, Andreas, CH-9400 Rorschach (CH)
(74) Vertreter: Hoffmann Eitle
(86) Internationale Anmeldenummer: PCT/EP2012/064175
(87) Internationale Veröffentlichungsnummer: WO 2013/026637

(56) Entgegenhaltungen:
- US-A- 5 083 899
- US-A- 6 109 863
- US-A1- 2005 201 855
- US-A1- 2010 096 856

## Beschreibung

Die vorliegende Erfindung betrifft einen Strömungskonverter zur Energiegewinnung, insbesondere zum Einsatz in einem Wasserkraftwerk, z. B. einem Laufwasserkraftwerk oder einem Gezeitenkraftwerk. Insbesondere betrifft die vorliegende Erfindung dabei einen Strömungskonverter, bei dem die Rotationsachse des Rotors im Wesentlichen quer, insbesondere senkrecht zur Strömungsrichtung verläuft.

Ein solcher Strömungskonverter ist beispielsweise aus der gattungsbildenden WO 2006/063833 A1 bekannt. Dabei liegt der Rotor des Strömungskonverters vollständig unter Wasser und senkrecht zur Strömungsrichtung frei. Die Schaufeln sind elastisch verformbar, so dass der Rotor bezüglich der Wasserströmung auf einer Seite seiner Rotationsachse eine größere Angriffsfläche und damit eine größere Widerstandskraft aufweist als auf einer gegenüberliegenden anderen Seite, um die Effizienz zu erhöhen. Dennoch besteht noch immer eine erhebliche Widerstandskraft, die der Rotation des Rotors entgegenwirkt.

Ein Strömungskonverter mit den Merkmalen im Oberbegriff von Anspruch 1 ist aus der US 6,109,863 A oder der US 2005/201855 A1 bekannt.

Ziel der vorliegenden Erfindung ist es einen eingangs genannten Strömungskonverter derart weiterzubilden, dass er hinsichtlich seiner Effizienz deutlich verbessert ist.

Dies wird durch einen Strömungskonverter mit den Merkmalen des Anspruchs 1 gelöst. Vorteilhafte Weiterbildungen finden sich in den Unteransprüchen.

Der vorliegenden Erfindung liegt der Gedanke zu Grunde den Rotor in einem die Strömung kanalisierenden bzw. leitenden Gehäuse aufzunehmen, so dass in Bezug auf die Rotationsachse des Rotors nur eine Seite des Rotors, die Antriebsseite, mit der Strömung beaufschlagt wird, um so die Widerstandskraft auf die bezüglich der Rotationsachse gegenüberliegende bzw. andere Seite zu verringern und dadurch die Effizienz zu verbessern.

Dementsprechend betrifft die vorliegende Erfindung einen Strömungskonverter zur Energiegewinnung mit einem Gehäuse und einem Rotor, der eine Vielzahl von Schaufeln aufweist, die zumindest in Radialrichtung bevorzugt in Radial- und Umfangsrichtung des Rotors verlaufen, wobei der Rotor um eine Rotationsachse drehbar ist. In Axialrichtung können die Schaufeln geradlinig verlaufen oder aber spiralförmig. Der Strömungskonverter ist vorzugsweise so gestaltet, dass der Rotor im Betrieb vollständig im Fluid (unter Wasser) liegt. Das Gehäuse weist einen Einströmkanal auf, mittels welchem die Fluidströmung kanalisiert in Bezug auf die Rotationsachse nur eine Seite des Rotors geströmt werden kann, während die in Bezug auf die Rotationsachse gegenüberliegende andere Seite nicht angeströmt wird. Somit trifft die Fluidströmung nur auf die Antriebsseite des Rotors, sprich die Seite, auf der die Strömungsrichtung des Fluids der Rotationsrichtung des Rotors entspricht, während eine Fluidströmung entgegen der Rotationsrichtung auf die Schaufelblätter durch den Einströmkanal auf der anderen Seite verhindert wird. Dadurch wird die Widerstandskraft auf die Schaufelblätter entgegen der Rotationsrichtung des Rotors deutlich verringert. Der Widerstand ergibt sich im Wesentlichen ausschließlich durch die Rotationsbewegung der Schaufeln durch das Fluid. Somit kann die Effizienz des Strömungskonverters deutlich verbessert werden.

Des Weiteren hat sich ergeben, dass im Bereich einer Einströmöffnung in den Einströmkanal Fluid aufgestaut wird, wodurch ein hoher Aufstaudruck entsteht. Ferner herrscht gerade in diesem Bereich eine hohe Strömungsgeschwindigkeit. Um einerseits den Aufstaudruck im Bereich einer Einströmöffnung des Einströmkanals abzubauen und andererseits die hohe Strömungsgeschwindigkeit zu nutzen, sieht die Erfindung vor, den Einströmkanal quer zur Strömungsrichtung bzw. in Radialrichtung des Rotors in einen äußeren Einströmkanal und einen inneren Einströmkanal zu unterteilen sowie zwei (unabhängige) Schaufelgruppen an dem Rotor vorzusehen. Die Schaufelgruppen umfassen eine erste Schaufelgruppe mit mehreren ersten Schaufeln sowie eine zweite in Radialrichtung des Rotors zu den ersten Schaufeln nach außen beabstandete zweite Schaufelgruppe mit mehreren zweiten Schaufeln. Dabei wird die Fluidströmung im inneren Einströmkanal mit einer relativ hohen Strömungsgeschwindigkeit auf die ersten Schaufeln geströmt, aber auch hier nur auf die Seite, bei der die Strömung der Rotationsrichtung des Rotors entspricht. Die Fluidströmung aus dem äußeren Einströmkanal ist hingegen auf die zweiten Schaufeln strömbar. Durch diese Ausgestaltung können durch die Nutzung der hohen Strömungsgeschwindigkeit sowie den Abbau des Aufstaudrucks im Einlauf noch höhere Effizienzen erzielt werden.

Insbesondere bei dieser Ausgestaltung hat es sich als vorteilhaft herausgestellt, wenn die ersten Schaufeln der ersten Gruppe starr an dem Rotor vorzugsweise von der Rotationsachse beabstandet an einem Rotorkern angebunden sind. Vorteilhafterweise sind diese Schaufeln in Axialrichtung des Rotors spiralförmig gewunden. Die ersten und/oder zweiten Schaufeln können ähnlich wie eine Turbine, ein Widerstandsläufer, ein Auftriebsläufer (Darrieuseffekt) oder ein Flettnerrotor (Magnuseffekt) wirken. Bevorzugt sind die ersten Schaufeln nach Art einer Turbine gestaltet, während die zweiten Schaufeln das Konzept der oben erwähnten anderen Läufer bzw. Rotoren aufgreifen.

Aufgrund der Hebelgesetze ist es von besonderem Vorteil die Schaufeln nur in einem in Radialrichtung äußersten Bereich bzw. bei vorhandenen ersten und zweiten Schaufeln insbesondere nur die zweiten Schaufeln, und auch diese bevorzugt nur in einen in Radialrichtung äußersten Bereich, anzuströmen, um dort die höchsten Kräfte zu konzentrieren und ein hohes Moment auf den Rotor zu erzeugen. Dies kann gemäß einer vorteilhaften Ausführungsform dadurch gewährleistet werden, dass die Fluidströmung aus dem äußeren Einströmkanal, in Bezug auf die Rotationsachse nur auf einen in Radialrichtung außen liegenden Abschnitt des Rotors strömbar ist bzw. strömt.

Zur weiteren Reduzierung des Widerstands entgegen der Rotationsrichtung des Rotors aufgrund der Bewegung der Schaufeln im Fluid (siehe oben) ist es bevorzugt, dass der Rotor einen Träger aufweist, der um die Rotationsachse drehbar ist und die zweiten Schaufeln, relativ zu dem Träger um eine Achse parallel zur Rotationsachse zumindest in eine Richtung begrenzt, bevorzugt frei, verschwenkbar sind. Dies ermöglicht es, dass sich die Schaufeln, wenn keine Strömung mehr auf die Schaufeln wirkt, vorzugsweise selbstständig in Rotationsrichtung ausrichten, so dass die flächigen zum Antrieb des Rotors dienenden Schaufelflächen parallel zur Rotationsrichtung liegen und damit der Widerstand in Rotationsrichtung reduziert ist.

Dies kann beispielsweise auch so realisiert werden, dass die zweiten Schaufeln jeweils aus mindestens zwei Einzelblättern gebildet sind, die jeweils relativ zu dem Träger um eine Achse parallel zur Rotationsachse begrenzt verschwenkbar sind, wobei die Einzelblätter bei einer besonders bevorzugten Ausführungsform in eine Aktivstellung verschwenkbar sind, in der sich die Blattflächen der Einzelblätter zur Bildung der flächigen zum Antrieb des Rotors dienenden Bereich der Schaufeln aneinander anschließen sowie in eine Passivstellung, in der sich die Schaufelfläche ähnlich einer Lamellenjalousie öffnet und die Einzelblätter in Rotationsrichtung, d. h. parallel zur Rotationsbewegung ausgerichtet sind.

Besonders bevorzugt erfolgt die Verschwenkung dabei ohne aktive Steuerung, d. h. passiv bzw. selbstständig.

Diesbezüglich kann in beiden Schwenkrichtungen ein Endanschlag vorgesehen sein, der die Schaufeln bzw. Einzelblätter jeweils in ihrer Endstellung begrenzt. Dabei schwenken die Schaufeln bzw. Einzelblätter bei Auftreffen der Fluidströmung auf die Schaufelfläche bzw. Blattfläche automatisch in die Aktivstellung bis sie an dem entsprechenden Anschlag anschlagen, während sie sich nachdem die Anströmung entfällt, passiv automatisch, wie ein Segel im Wind, in die Strömung bzw. parallel zur Rotationsrichtung bewegen. Alternativ ist es selbstverständlich auch denkbar eine aktive Steuerung durch Stellmotoren oder andere Verstelleinrichtungen zu realisieren.

Darüber hinaus ist es zur Effizienzerhöhung besonders bevorzugt zumindest den äußeren Einströmkanal, von einer Einströmöffnung zu einer Ausströmöffnung trichterförmig verlaufen zu lassen, um die Strömungsgeschwindigkeit an der Ausströmöffnung zu erhöhen.

Dabei kann es bevorzugt sein, dass der äußere Einströmkanal gegenüberliegende Seitenwände aufweist, von denen eine erste an dem Rotor vorbei läuft und die zweite relativ zur ersten Seitenwand so geneigt ausgerichtet ist, dass sie in der Verlängerung in einer Aufsicht den Rotor in einem Bereich zwischen der Rotationsachse und dem Außenumfang des Rotors, insbesondere der radial außen liegenden Hälfte der Strecke zwischen Rotationsachse und Außenumfang des Rotors gesehen quer zur Fluidströmung schneidet.

Bei dieser Ausgestaltung kann es ferner vorteilhaft sein in der zweiten Seitenwand wenigstens eine Öffnung, vorzugsweise mehrere Öffnungen vorzusehen, um eine Einströmöffnung in den inneren Einströmkanal auszubilden, wobei die zweite Seitenwand den Einströmkanal in Radialrichtung nach außen begrenzt sowie eine dritte Seitenwand vorgesehen ist, die den Einströmkanal in Radialrichtung nach innen begrenzt. Dadurch kann der Materialeinsatz minimiert werden und die zweite Seitenwand erhält eine Doppelfunktion, nämlich die Begrenzung des äußeren wie auch des inneren Einströmkanals und die Bildung der Einströmöffnung für den inneren Einströmkanal.

Hier kann es vorteilhaft sein, dass die dritte Seitenwand in der Verlängerung in einer Aufsicht die Rotationsachse des Rotors schneidet.

Darüber hinaus kann es vorteilhaft sein, die ersten Schaufeln an ihrer radial inneren Seite in einem Abstand zur Rotationsachse an dem Rotor anzubinden. Eine spiralförmige Ausgestaltung der ersten Schaufeln hat dabei ferner den Vorteil, dass die Strömung nach oben umgelenkt wird, wobei über dem Strömungskonverter eine Verwirbelung entsteht. Dadurch kann die Strömung in Strömungsrichtung gesehen hinter den ersten Schaufeln nicht auf die zweiten Schaufeln treffen und erzeugt entgegen der Rotationsrichtung keinen Widerstand auf die Schaufeln. Ferner kann die Verwirbelung oberhalb des Strömungskonverters gegebenenfalls zur weiteren Energiegewinnung genutzt werden. Hier könnte oberhalb des Rotors eine Mantelturbine angeordnet werden, deren Rotationsachse parallel zur Strömungsrichtung und/oder zur Rotationsachse des Rotors verläuft. Auch könnte hier eine gemeinsame Rotationsachse von Rotor und Mantelturbine zum Einsatz kommen.

Gemäß einer weiteren vorteilhaften Ausführungsform verläuft die Rotationsachse im Gebrauch vertikal. Dies ist insbesondere dann vorteilhaft, wenn gemäß einer Ausführungsform zumindest die Rotationsachse eines Rotors unmittelbar mit dem Läufer eines Generators, insbesondere eines Ringgenerators zusammenwirkt. Durch die vertikale Anordnung kann dieser Generator auch bei vollständig im Fluid (Wasser) befindlichen Rotor von der Wasseroberfläche her gewartet werden. Dies gilt selbstverständlich auch bei anderen Ausgestaltungen als der direkten Anbindung von Rotor und Generator. Hier besteht ein Zugang zum Strömungskonverter von der Fluid- bzw.

Wasseroberfläche her, was Wartungsarbeiten deutlich erleichtert.

Darüber hinaus ist der Strömungskonverter modular einsetzbar, d. h. es können mehrere Rotoren in einem Gehäuse aufgenommen werden, denen jeweils ein separater Einströmkanal zugeordnet ist. Zur besseren Lastverteilung werden die Rotoren dabei gegenläufig drehbar angeordnet und es wird vorteilhafterweise eine gerade Zahl an Rotoren vorgesehen.

Weitere Merkmale und Vorteile der vorliegenden Erfindung, die alleinstehend oder in Kombinationen mit einem oder mehreren der obigen Merkmale umgesetzt werden können, es sei denn, sie widersprechen einander, sind der folgenden Beschreibung möglicher Ausführungsformen der vorliegenden Erfindung zu entnehmen. Diese erfolgt unter Bezugnahme auf die begleitenden Zeichnungen, in denen
Figur 1 eine perspektivische Ansicht eines Strömungskonverters gemäß einer ersten Ausführungsform, die nicht zum Schutzumfang der vorliegenden Erfindung gehört, zeigt;
Figur 2 eine Draufsicht auf den Strömungskonverter aus Figur 1 mit teilweise entfernten Teilen zeigt;
Figur 3 eine perspektivische Ansicht eines Strömungskonverters gemäß einer zweiten Ausführungsform, die nicht zum Schutzumfang der vorliegenden Erfindung gehört, zeigt;
Figur 4 eine weitere perspektivische Ansicht des Strömungskonverters aus Figur 3 mit teilweise entfernten Teilen zeigt;
Figur 5 eine perspektivische Ansicht eines Strömungskonverters gemäß einer dritten Ausführungsform der vorliegenden Erfindung zeigt;
Figur 6 im Wesentlichen eine Draufsicht auf den Strömungskonverter aus Figur 5 zeigt; und
Figur 7 eine schematische Ansicht eines Kraftwerks mit einer Reihe aus Strömungskonvertern gemäß einer der obigen Ausführungsformen zeigt, wobei die Reihe an Strömungskonvertern in Vertikalrichtung verfahrbar ist.

Es versteht sich, dass in der folgenden Beschreibung und den Zeichnungen gleiche Bezugszeichen für gleiche oder vergleichbare Elemente verwendet wurden und auf wiederholte Beschreibungen in allen Ausführungen verzichtet wird. Vielmehr gelten die Ausführungen zu einem Element in einer Ausführungsform gleichfalls für das gleiche oder vergleichbare Elemente in den anderen Ausführungsformen. Darüber hinaus versteht sich, dass Einzelmerkmale einer Ausführungsform auch in andere Ausführungsformen überführt werden können, auch wenn diese in den Figuren nicht dargestellt sind und in der Beschreibung nicht explizit genannt wurden, solange einer Übertragung solcher Einzelmerkmale nichts im Wege steht.

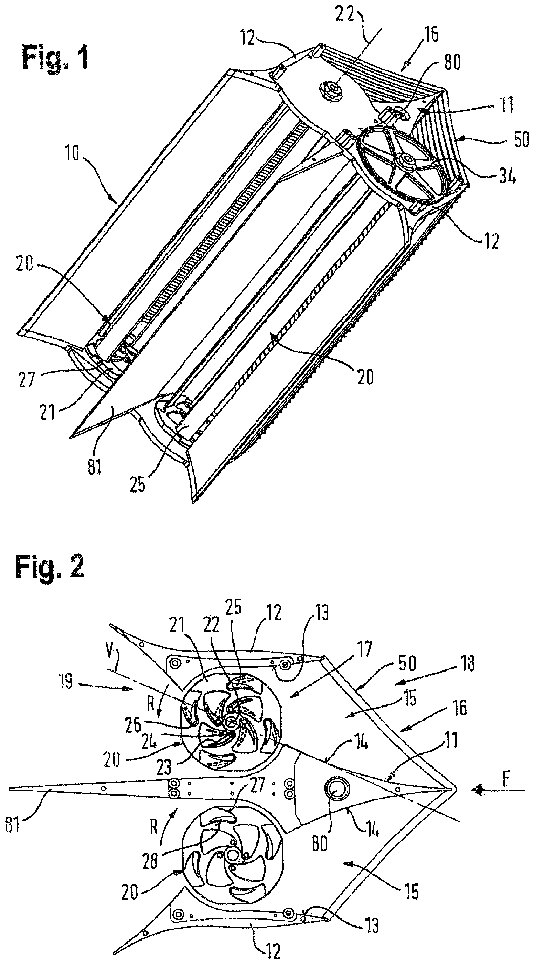

Der Strömungskonverter, wie er in Figur 1 dargestellt ist, umfasst ein Gehäuse 10, in dem zwei Rotoren 20 gegenläufig drehbar aufgenommen sind.

Das Gehäuse 10 weist eine zentrale Strömungsführung 11 sowie jeweils auf entgegengesetzten Seiten der Strömungsführung 11 angeordnete äußere Strömungsführungen 12 auf. Eine dem Rotor 20 zugewandte Seite der Strömungsführungen 12 bildet eine außen liegende Seitenwand 13 eines Einströmkanals 15. Die der jeweiligen Seitenwand 13 gegenüberliegende Seite der zentralen Strömungsführung 11 bildet eine den Einströmkanal 15 ebenfalls begrenzende Seitenwand 14. Dabei können die Seitenwände 13 bzw. 14 entlang der Strömung geradlinig oder konkav bzw. konvex gekrümmt verlaufen. Gleiches gilt für die Gestaltung der Seitenwände 13 bzw. 14 in Axialrichtung.

Es ist jedoch vorteilhaft, wenn die Seitenwände 13 und 14 zusammen in der Aufsicht (Figur 2) eine Art Trichter bilden, d. h. aufeinander zu laufen.

Dabei umfasst der Einströmkanal 15 an seiner der Fluidströmung F zugewandten Seite eine Einströmöffnung 16 und seiner entgegengesetzten Seite eine Ausströmöffnung 17. Die Einströmöffnung 16 kann mit einem Gitter 50 ausgestattet sein, um das Eintreten von Fremdkörpern in den Strömungskonverter, insbesondere den Rotor 20 zu vermeiden.

Der Rotor 20 weist einen Träger 21 auf, mittels dem der Rotor 20 um die Rotationsachse 22 drehbar in dem Gehäuse 10 aufgenommen ist.

Bei der dargestellten Ausführungsform weist der Rotor 20 zwei Schaufelgruppen auf. Eine erste Schaufelgruppe liegt radial innen, während die andere Schaufelgruppe radial außen liegt. Die radial innen liegende Schaufelgruppe weist mehrere (hier vier) radial innen liegende Schaufeln 23 auf, auf deren Darstellung in Figur 1 sowie in Figur 2 im Rotor 20 unten verzichtet wurde. Die Schaufeln 23 sind um eine Schwenkachse 24, die parallel zur Rotationsachse 22 des Rotors verläuft, zwischen einer Aktivstellung (durchgezogen dargestellt) und einer Passivstellung (gestrichelt dargestellt) verschwenkbar. Die Schaufeln 23 weisen eine Wölbung in Rotationsrichtung R des Rotors 20 auf, so dass sie sich in der Aktivstellung in Radial- und Umfangsrichtung des Rotors erstrecken. Die radial außen liegende Schaufelgruppe weist ebenfalls mehrere (hier viert) außen liegende Schaufeln 25 auf, die ebenfalls um eine Schwenkachse 26 parallel zur Rotationsachse 22 zwischen einer Aktivstellung (gestrichelt dargestellt) und einer Passivstellung (durchgezogen dargestellt) verschwenkbar sind. Um die Aktiv- bzw. Passivstellung der Schaufeln 23 und 25 zu begrenzen, sind im Träger 21 Anschläge 27, die die Aktivstellung begrenzen sowie 28, die die Passivstellung begrenzen, vorgesehen. Zwischen diesen Anschlägen sind die Schaufeln 23, 25 frei verschwenkbar.

Wie es am besten aus Figur 2 ersichtlich ist, ist der Rotor 20 so drehbar in dem Gehäuse 10 aufgenommen, dass eine Fluidströmung aus dem Einströmkanal in Bezug auf die Rotationsachse 22 (gesehen quer zur Strömung F) nur in Rotationsrichtung R auf die Schaufel. d. h. nur auf die antriebsseitigen Schaufeln wirkt. Hierfür schneidet die Seitenwand 14 in ihrer Verlängerung, wie durch die gestrichelte Linie V in Figur 2 dargestellt, die Rotationsachse 22 des Rotors, womit eine Fluidströmung nur auf die in Radialrichtung und quer bzw. senkrecht zur Strömungsrichtung F gesehen auf die Schaufeln 23 bzw. 25 des Rotors 20 strömen kann. Dadurch wird der Widerstand auf den Rotor durch eine Strömung auf die Schaufeln auf der anderen Seite und entgegen der Rotationsrichtung R des Rotors reduziert.

Eine weitere Reduzierung wird dadurch erzielt, dass die Schaufeln 23 bzw. 25 bei Auftreffen der Fluidströmung F auf die Schaufeln aus dem Einströmkanal in die Aktivstellung verschwenken, so dass die Fluidströmung auf die großen Schaufelflächen wirkt und somit eine Rotation des Rotors 20 induziert, während die Schaufeln nach Überschreiten eines Totpunkts im Bereich des Auslaufs 19 gegenüber dem Einlauf 18 selbsttätig in die "Strömung" schwenken (sich zur Rotationsrichtung ausrichten), so dass die kleine Fläche der Schaufeln im Bereich der Schwenkachsen in Rotationsrichtung weist, so dass die durch das Fluid zu bewegende Fläche der Schaufeln minimiert und der Widerstand reduziert werden kann.

Darüber hinaus ist in den Figuren 1 und 2 eine Durchgangsöffnung 80 durch die zentrale Strömungsführung 11 sichtbar. Diese Durchgangsöffnung 80 dient einer einfachen Installation in einem Gewässer. Hierfür wird eine Halterung im Gewässergrund verankert und der Strömungskonverter über die Durchgangsöffnung 80 auf die Halterung, die z. B. in Form einer Stange oder eines Rohrs ausgestaltet sein kann, aufgesteckt. Dabei können mehrere Strömungskonverter übereinander angeordnet werden.

Die nach hinten auslaufende Finne 81 der mittleren Strömungsführung 11 dient in diesem Einsatzgebiet der automatischen Ausrichtung in die jeweilige Strömungsrichtung. Der Strömungskonverter ist um die Halterung drehbar und kann sich damit selbst ausrichten. Diese Ausgestaltung ist insbesondere bei der Nutzung als Gezeitenkraftwerk sinnvoll und gegebenenfalls auch nur dort notwendig. In anderen Bereichen, z. B. einem Laufwasserkraftwerk, kann auf die Ausgestaltung der Finne 81 gegebenenfalls verzichtet werden.

Darüber hinaus ist es denkbar die Strömungsführungen 11 und 12 als Auftriebskörper auszugestalten, so dass sich die Strömungskonverter je nach Wasserstand selbstständig entlang der Halterung (nicht dargestellt) in die optimale Position bewegen können.

Dieses Prinzip lässt sich auch auf ein anderes Halterungsprinzip übertragen.

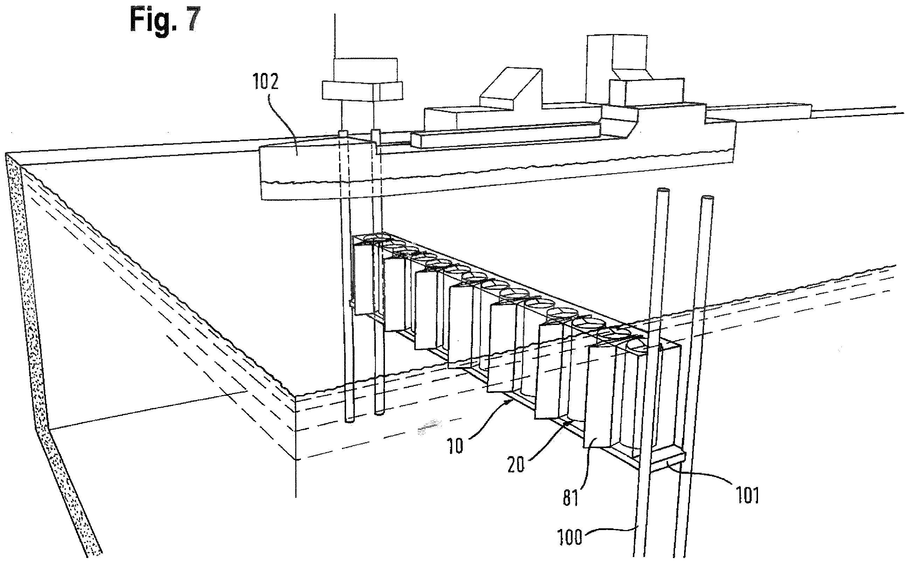

So wäre es denkbar, wie es in Figur 7 schematisch gezeigt ist, beidseits eines Flussbetts entsprechende Halterungen 100 vorzusehen, an denen verschiebbar gelagert eine Aufnahme für eine Vielzahl (z. B. eine Reihe) von Strömungskonvertern verschieblich gelagert ist. Dadurch kann die in Figur 7 dargestellte Reihe aus Strömungskonvertern zusammen entlang der Halterungen 100 in Vertikalrichtung nach oben und unten verfahren werden. Dies kann beispielsweise derart realisiert werden, dass die Aufnahme 101 und/oder die Strömungsführungen 11 bzw. 12 als Austriebskörper ausgestaltet sind, die beliebig mit Druckluft befüllt bzw. entleert werden können, um die Lage der Strömungskonverter in Vertikalrichtung zu verändern. Dieses Prinzip funktioniert ähnlich einem U-Boot. Die einzelnen Strömungskonverter der Reihe können dabei ebenfalls auf einer Stange, die die Öffnung 80 durchdringt, drehbar angeordnet sein, um sich durch die Finne 81 automatisch optimal zur Strömungsrichtung über die Breite des Flusses ausrichten zu können, sind aber vorteilhafterweise in Vertikalrichtung nicht entlang dieser Stange verschiebbar, wie es oben erläutert wurde, da dies durch die Aufnahme 101 realisiert ist.

Selbstverständlich ist es jedoch in Anlehnung an die obige Beschreibung auch denkbar bei Ausbildung der Strömungsführungen 11 und/oder 12 als Auftriebskörper diese mit Druckluft zu füllen und zu entleeren, um die Vertikallage des Strömungskonverters bzw. der Strömungskonverter gezwungen zu steuern.

Beide Varianten führen dazu, dass der Strömungskonverter für Wartungsarbeiten auf einfache Art und Weise über die Wasseroberfläche angehoben werden kann und damit einfach erreichbar ist. Darüber hinaus ist eine einfache Positionierung des bzw. der Strömungskonverter in der optimalen Wassertiefe für den höchsten Wirkungsgrad möglich.

Dies kann über eine automatische Steuerung erfolgen, die auf Grundlage des Wasserstands und/oder in Vertikalrichtung und/oder Horizontalrichtung gemessener Strömungsgeschwindigkeiten den optimalen Leistungsbereich für den Strömungskonverter bzw. die Anlage ermittelt und den Strömungskonverter durch Befüllung/Entleeren der Auftriebskörper in der besten Lage positioniert. Es versteht sich, dass dies auch durch andere Mittel als durch Druckluft, beispielsweise mechanische und motorische Einrichtungen ermöglicht werden kann.

Auch wäre es denkbar bei Schiffsbetrieb die Strömungskonverter durch diese Mittel abzusenken, wie es in Figur 7 dargestellt ist (Schiff 102). Nach dem Durchfahren des Schiffs 102 könnte die Anlage wieder in die optimale Position gebracht werden.

Darüber hinaus kann es vorteilhaft sein, um die Anlage von außen unsichtbar zu gestalten, die Halterung/-en teleskopisch auszuführen, wobei sich die Halterungen beim Auftrieb der Strömungskonverter auseinanderziehen und beim Absinken ineinanderschieben.

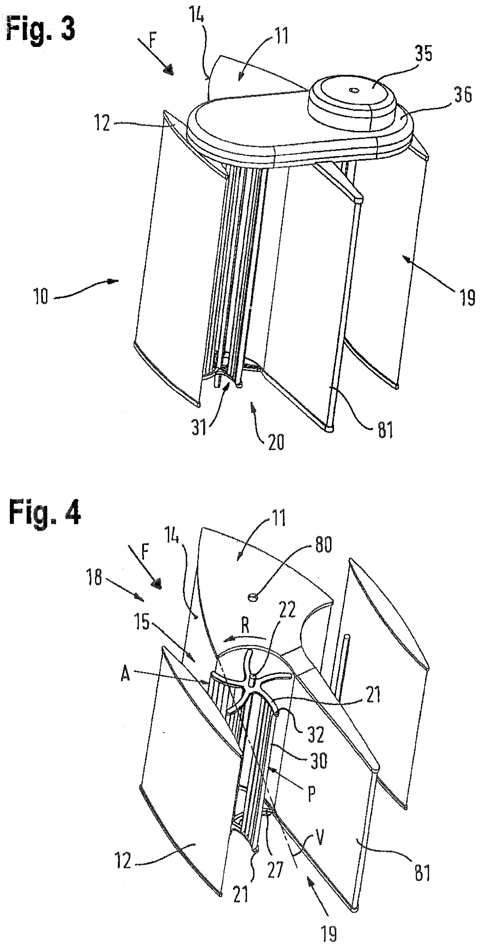

An dieser Stelle sei erwähnt, dass die oben beschriebenen Ausgestaltungen (Halterung, Auftriebskörper und/oder optimale Positionierbarkeit in Vertikalrichtung) auch in den Ausführungsformen in den Figuren 3 und 4 sowie Figuren 5 und 6 zum Einsatz kommen kann und auch als eigenständiger Aspekt unabhängig von dem Erfindungsgedanken der Kanalisierung der Fluidströmung durch einen Einströmkanal umsetzbar ist.

Die Rotation der Rotoren 20 wird bei der dargestellten Ausführungsform vorteilhafterweise durch einen in Figur 1 nicht dargestellten gekapselten Generator (siehe Figur 3) in elektrische Energie umgewandelt. Dabei kann es vorteilhaft sein, wie in Figuren 1 und 2 dargestellt, zwei Rotoren 20 mit parallelen Rotationsachsen 22 und jeweils eigenständigen Einströmkanälen 15 vorzusehen, die beispielsweise über Zahnräder 30 gekoppelt sind, so dass nur ein Generator erforderlich ist. Hierbei ist das in Figur 1 linke Zahnrad nicht dargestellt, ist jedoch in der Gestalt ähnlich dem Zahnrad 30 für den rechter Hand dargestellten Rotor 20 und kämmt mit diesem. Selbstverständlich ist es auch denkbar mehr als zwei oder nur einen Rotor 20 in dem Gehäuse 10 vorzusehen. Ebenso sind selbstverständlich andere Einrichtungen als ein gekapselter Generator zur Umwandlung der Rotation in elektrische Energie denkbar. Hierbei ist die Verwendung eingeständiger Ringgeneratoren für jeweils einen Rotor vorteilhaft. Dabei ist es vorteilhaft den Läufer des Ringgenerators durch die Rotation des Rotors anzutreiben. Dabei ist eine direkte Kopplung des Läufers mit beispielsweise der Rotationsachse des Rotors vorteilhaft, während der Stator des Ringgenerators in dem Gehäuse des Strömungskonverters untergebracht werden kann. Indem die Fluidströmung erfindungsgemäß auf einen äußeren Umfangsbereich der Schaufeln aufgebracht wird, können hohe Rotationsgeschwindigkeiten des Rotors erzielt werden. Auch können mehrere Ringgeneratoren durch einen Rotor angetrieben, z. B. gestapelt werden, wenn ausreichend hohe Strömungsgeschwindigkeiten vorliegen. Bei einer Strömungsgeschwindigkeit des Fluids von 2 m/s wären beispielsweise zwei Ringgeneratoren bei 3 m/s vier Generatoren und bei höheren Geschwindigkeiten mehr Ringgeneratoren denkbar. Dabei können die Ringgeneratoren in Vertikalrichtung oberhalb des Rotors, unterhalb des Rotors oder auch in einem Bereich zwischen den oberen und unteren Enden des Rotors angeordnet werden. In diesem Fall wären die Zahnräder 30 nicht vorhanden, sondern würden vielmehr den Läufer des Ringgenerators bilden. Dieser Grundgedanke führt ferner auch zu einem deutlich kompakteren und preisgünstigeren Generator, wobei je nach Anzahl der eingesetzten Generatoren mehrere Strömungsgeschwindigkeiten abgedeckt werden können. Auch ist es möglich andere Systeme als das Gitter 50 vorzusehen, um das Eindringen von Fremdkörpern in die Rotoren 20 zu verhindern.

Darüber hinaus ist es auch denkbar die Konfiguration der Schaufeln anders zu gestalten. Eine Alternativmöglichkeit wird unter Bezugnahme auf die Figuren 3 und 4 hinsichtlich einer zweiten Ausführungsform erläutert. Dabei
wird lediglich auf die Unterschiede zur Ausführungsform in Figur 1 eingegangen und ansonsten auf die Ausführungsformen oben verwiesen.

Im Wesentlichen unterscheidet sich die zweite Ausführungsform in der Ausgestaltung des Läufers 20 bzw. dessen Schaufeln 31 sowie in der Ausgestaltung der Seitenwand 14 der zentralen Strömungsführung 11.

Der Rotor 20 der zweiten Ausführungsform weist ebenfalls einen Träger 21 auf, der in Vertikalrichtung oben und unten vorgesehen ist und um die Rotationsachse 22 drehbar in dem Gehäuse 10 aufgenommen ist. Wie auch bei der Ausführungsform in Figur 1 verläuft im Gebrauch die Rotationsachse 22 vertikal, um einen Zugang von oben an den in Figur 3 dargestellten Ringgenerator 31 und gegebenenfalls die Mechaniken wie beispielsweise das Zahnrad unter der Abdeckung 32 von der Wasseroberfläche her zu gewährleisten.

Die Schaufeln 31 (hier fünf) setzen sich bei dieser Ausführungsform aus mehreren Einzelblättern 30 (hier fünf) zusammen. Die Einzelblätter 30 sind wie in Bezug auf die Ausführungsform in Figur 2 passiv zwischen einer Aktivstellung und einer Passivstellung verschwenkbar, wobei die Aktivstellung durch einen Anschlag 27 begrenzt ist, während die Passivstellung ebenfalls durch einen Anschlag begrenzt sein kann aber nicht muss. Die Träger 21 sind dabei nach Art eines Schaufelrads ausgebildet, können aber ebenso wie in der Ausführungsform in Figur 1 flächig ausgebildet sein.

Wie es am besten aus Figur 4 ersichtlich ist, ergänzen sich die Einzelblätter 30 in der Aktivstellung mit A in Figur 4 gekennzeichnet und schließen aneinander an, um eine geschlossene Schaufelfläche zu bilden, auf welche die Fluidströmung wirkt, um den Rotor 20 in Rotation zu versetzen. Nachdem ein Totpunkt im Bereich des Auslaufs 19 überschritten ist, können die Einzelblätter 30, wie in Bezug auf Figur 2 der ersten Ausführungsform erläutert, in eine Passivstellung mit P in Figur 4 gekennzeichnet verschwenken, so dass die kleine Fläche der Einzelblätter 30 im Bereich der Schwenkachsen 32 jeweils in Rotationsrichtung R weist und damit nur einen geringen Widerstand bilden. D. h. die Einzelblätter 30 suchen sich zu diesem Zeitpunkt die Stellung mit geringstem Widerstand selbstständig. Mit anderen Worten sind die Schaufeln 31 nach Art eines Lamellenvorhangs gestaltet. Zum Antrieb des Rotors schließen sich die Lamellen auf der Antriebsseite und öffnen sich bei Erreichen der anderen Seite.

Ein weiterer Unterschied dieser zweiten Ausführungsform liegt darin, dass die Seitenwand 14 in ihrer Verlängerung V weiter von der Rotationsachse 22 nach außen verschoben ist, so dass die Strömung in Richtung der radial außen liegenden Bereiche der Schaufeln 31 kanalisiert wird, um durch die Hebelgesetze ein höheres Moment und damit eine Erhöhung der Effizienz zu erzielen.

Dies hat weiterhin den Vorteil, dass bei der plötzlichen Entspannung des Anstaudrucks im Einlauf 18, die dabei entstehende Verwirbelung der Strömung nicht entgegen der Rotationsrichtung R auf die Schaufelflächen bzw. den Rotor wirkt und dadurch die Effizienz verbessert ist.

Als nachteilig hat sich bei dieser zweiten Ausführungsform jedoch herausgestellt, dass sich zum einen ein relativ hoher Anstaudruck im Einlauf 18 ausbildet und zum anderen zunächst im Einlauf 18 eine starke Verlangsamung der Strömungsgeschwindigkeit durch den hohen Anstaudruck entsteht.

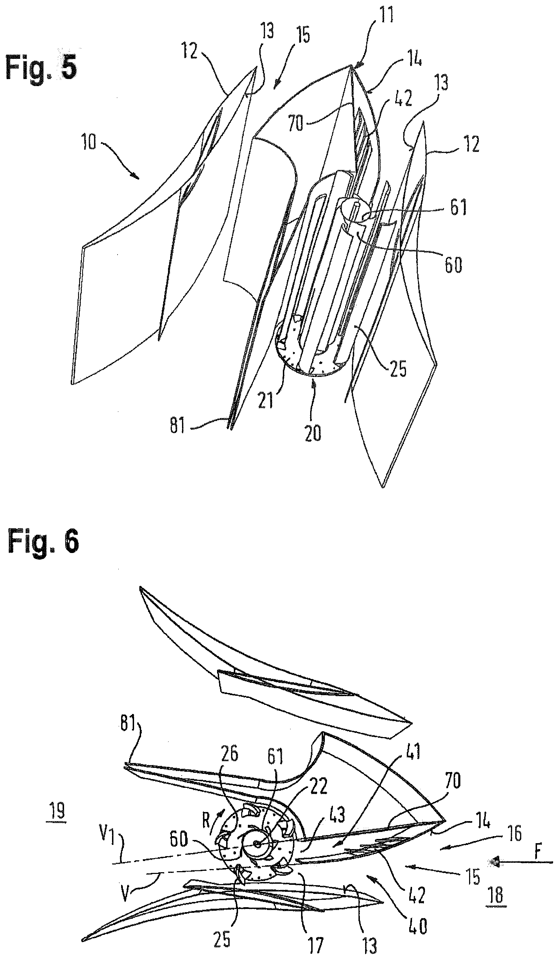

Um dem entgegenzuwirken, wurde eine weitere alternative Ausgestaltung, wie sie in den Figuren 5 und 6 dargestellt ist, entwickelt.

Hierbei liegt ein Hauptunterschied zu den vorherigen beiden Ausführungsformen darin, dass der Einströmkanal 15 in einen ersten äußeren Einströmkanal 40 und einen zweiten inneren Einströmkanal 41 unterteilt ist.

Ein weiterer Unterschied zur Ausführungsform in Figur 1 liegt darin, dass die radial innen liegenden Schaufeln bei der Ausführungsform in den Figuren 5 und 6 anders als bei der Ausführungsform in Figur 1 und 2 starr und in Axialrichtung spiralförmig verwunden ausgestaltet sind und damit ähnlich einer Turbine wirken.

Wie es am besten aus Figur 6 ersichtlich wird, ist der radial außen liegende Strömungskanal 40 von seiner Gestalt her ähnlich dem Einströmkanal 15 in den Ausführungsformen in den Figuren 3 und 4 gestaltet. Er wird durch die Seitenwände 13 und 14 begrenzt, wobei die Verlängerung der Seitenwand 14 den Rotor quer zur Fluidströmung F zwischen der Rotationsachse 22 und dem Außenumfang schneidet, insbesondere in der äußeren Hälfte des Rotors und insbesondere zwischen dem äußeren Ende der innen liegenden Schaufeln 60 und dem Außenumfang. In der radial innen liegenden Seitenwand 14 sind mehrere (hier drei) vorteilhafterweise über im Wesentlichen die gesamte Höhe in Axialrichtung verlaufende Einströmöffnungen 42 vorgesehen, die einen Einströmen von Fluid in den radial innen liegenden Einströmkanal 41 statten. Der radial innen liegende Einströmkanal 41 weist ebenso eine Ausströmöffnung 43 auf und wird einerseits von der Seitenwand 14 sowie von einer Seitenwand 15 begrenzt. Die Seitenwand 14 dient dabei als Trennwand zur Trennung der Einströmkanäle 40 und 41. Durch die obige Ausgestaltung kann die Strömung zweigeteilt werden und eine hohe Strömungsgeschwindigkeit aus der Ausströmöffnung 43 des innen liegenden Einströmkanals 41 auf die Schaufeln 60 generiert werden, die spiralförmig gewunden in Axialrichtung starr an den Trägern 21 angebunden sind. Hierzu verläuft beispielsweise eine Art Rohr 61 konzentrisch zur Rotationsachse 22 und in Radialrichtung in einem Abstand zur Rotationsachse 22, wobei die radial innen liegenden Enden der spiralförmig gewundenen Schaufeln 60 an dem Rohr 61, das mit den Trägern 21 verbunden ist, starr angebunden sind, von wo aus sich die Schaufeln 60 in Radialrichtung wie auch in Umfangsrichtung erstrecken. Durch die spiralförmige Ausgestaltung wird es ermöglicht die aus der Ausströmöffnung 43 des radial innen liegenden Einströmkanals 41 ausströmende Fluidströmung in Axialrichtung der Rotationsachse 22 umzulenken, so dass die Strömung hinter dem Rohr bzw. den ersten Schaufeln 60 nicht auf die in der Aktivdarstellung dargestellten radial außen liegenden Schaufeln 25 auftritt und somit einerseits der Widerstand auf die Schaufeln 25 reduziert wird. Andererseits kann die Verwirbelung in Figur 5 oberhalb des Rotors 20 zur weiteren Energiegewinnung, beispielsweise mittels einer Mantelturbine genutzt werden.

Die Ausgestaltung der radial außen liegenden Schaufeln 25 ist ähnlich der Ausgestaltung der radial außen liegenden Schaufeln 25 in den Figuren 1 und 2, so dass auf eine erneute Beschreibung verzichtet wird.

Darüber hinaus ist es erkennbar, dass der Auslauf 19, wie in Figur 6 ersichtlich, ähnlich wie in Figur 2 dargestellt, ausgestaltet ist. Ein ähnlicher Auslauf 19 könnte auch bei der Ausführungsform in den Figuren 3 und 4 umgesetzt werden. Gleichfalls ist es aber auch denkbar den Auslauf 19 in den Figuren 1 bzw. 2 oder den Figuren 5 und 6, ähnlich wie in Figur 4 dargestellt, zu gestalten. Auch in der Ausgestaltung in den Figuren 3 bis 6 ist das Vorsehen eines Gitters 50, wie in den Figuren 1 und 2 dargestellt, möglich.

Wie es aus den obigen Beschreibungen ersichtlich wird, sind verschiedenartige Modifikationen und Kombinationen der unterschiedlichen Ausführungsformen denkbar. So wäre es beispielsweise denkbar unabhängig von der Ausgestaltung der Schaufeln 60 den Einströmkanal 15 in den Ausführungsformen in den Figuren 1/2 bzw. 3/4 in einen inneren und äußeren Einströmkanal 41 bzw. 40 zu unterteilen, wobei die Strömung aus dem inneren Einströmkanal 41 auf die radial innen liegenden Schaufeln 23 in Figur 1 und die Strömung aus dem radial äußeren Einströmkanal 40 auf die radial äußeren Schaufeln 25 strömen könnte. Bei der Ausführungsform in den Figuren 3 und 4 wäre es beispielsweise denkbar die Einzelblätter, die aus dem inneren Einströmkanal 41 angeströmt werden, starr anzubinden, während sich die anderen Einzelblätter verschwenkbar an diese anschließen, aber aus dem äußeren Einströmkanal 40 angeströmt werden. Auch wäre es in diesem Fall denkbar die radial innen liegenden Schaufeln 23 bzw. die radial innen liegenden Einzelblätter 30 zusätzlich mit einer spiralförmigen Windung in Axialrichtung zu versehen, um auch hier eine Umlenkung der Strömung zu erreichen.

Auch wäre es denkbar das Rohr 61 um die Rotationsachse 22 in den vorherigen Ausführungsformen einzusetzen, um den anströmbaren Bereich des Rotors im Bereich der Rotationsachse 22 zu begrenzen.

Dem Fachmann werden darüber hinausgehend weitere Modifikationen und Kombinationsmöglichkeiten der verschiedenen Ausführungsformen ersichtlich sein, die gleichfalls in den Umfang der vorliegenden Erfindung fallen, wie er durch die nachfolgenden Ansprüche definiert ist.

Darüber hinaus versteht sich, dass die verschiedenartigen Konzepte beispielsweise der Schaufelgruppen und/oder der Verschwenkbarkeit der Einzelschaufeln bzw. der Einzelblätter einer Schaufel sowie die spiralförmige Gestaltung innen liegender Schaufeln zur Strömungsumlenkung und/oder Nutzung der umgelenkten Strömung zur weiteren Energiegewinnung beispielsweise durch Verwendung einer Mantelturbine (siehe vorher) unabhängig von dem Erfindungsgedanken der Kanalisierung der Fluidströmung durch einen Einströmkanal umgesetzt werden können. Ferner ist auch die direkte Ankopplung der Rotorachse(-n) an den Läufer eines Ringgenerators als eigenständiger Aspekt zu sehen. Auch ist es denkbar statt der Verschwenkbarkeit die Schaufeln starr anzubinden aber selbst elastisch verformbar zu gestalten, wie es der eingangs genannte Stand der Technik erwähnt.

## Patentansprüche

1. Strömungskonverter zur Energiegewinnung, umfassend:
ein Gehäuse (10); und
einen Rotor (20), der eine Vielzahl von Schaufeln (23, 25, 31) aufweist, die in Radialrichtung des Rotors (20) verlaufen; wobei der Rotor (20) um eine Rotationsachse (22) drehbar ist, **dadurch gekennzeichnet, dass** das Gehäuse (10) einen Einströmkanal (15) aufweist und der Rotor (20) in dem Gehäuse (10) drehbar aufgenommen ist, so dass eine Fluidströmung (F) aus dem Einströmkanal (15) in Bezug auf die Rotationsachse (22) nur auf die Antriebsseite des Rotors (20) trifft, **dadurch gekennzeichnet, dass** der Einströmkanal (15) in Radialrichtung des Rotors (20) in einen äußeren Einströmkanal (40) und einen inneren Einströmkanal (41) unterteilt ist und die Schaufeln mehrere erste Schaufeln (60) sowie in Radialrichtung dazu beabstandet mehrere zweite Schaufeln (25) umfassen, wobei die Fluidströmung (F) aus dem inneren Einströmkanal (41) auf die ersten Schaufeln (60) und die Fluidströmung (F) aus dem äußeren Einströmkanal (40) auf die zweiten Schaufeln (25) strömbar ist.

2. Strömungskonverter nach Anspruch 1, bei dem die ersten Schaufeln (60) starr an dem Rotor (20) angebunden sind.

3. Strömungskonverter nach Anspruch 1 oder 2, bei dem die ersten Schaufeln (20) in Axialrichtung des Rotors (20) spiralförmig gewunden sind.

4. Strömungskonverter nach einem der vorstehenden Ansprüche, bei dem die Fluidströmung (F) aus dem äußeren Einströmkanal (40), in Bezug auf die Rotationsachse (22) nur auf einen in Radialrichtung außen liegenden Abschnitt des Rotors (26) strömbar ist.

5. Strömungskonverter nach einem der vorstehenden Ansprüche, bei dem der Rotor (20) einen Träger (21) aufweist, der um die Rotationsachse (22) drehbar ist und die zweiten Schaufeln (25) relativ zum dem Träger (21) um eine Achse (23, 24) parallel zur Rotationsachse (22) begrenzt schwenkbar sind.

6. Strömungskonverter nach einem der vorstehenden Ansprüche 1 bis 4, bei dem der Rotor (20) einen Träger (21) aufweist, der um die Rotationsachse (22) drehbar ist und die zweiten Schaufeln jeweils aus mindestens zwei Einzelblättern (30) gebildet sind, die jeweils relativ zum dem Träger (21) um eine Achse (32) parallel zur Rotationsachse (22) begrenzt schwenkbar sind.

7. Strömungskonverter nach Anspruch 6, bei dem die Einzelblätter (30) in eine Aktivstellung schwenkbar sind, in der sich die Blattflächen der Einzelblätter (30) aneinander anschließen.

8. Strömungskonverter nach einem der Ansprüche 5 bis 7, bei der die Schaufeln (23, 25, 31) bzw. deren Einzelblätter (30) passiv oder aktiv verschwenkbar sind.

9. Strömungskonverter nach einem der vorstehenden Ansprüche, bei dem der äußere Einströmkanal (40) von einer Einströmöffnung (16) zu einer Ausströmöffnung (17) trichterförmig verläuft.

10. Strömungskonverter nach einem der vorstehenden Ansprüche, bei dem der äußere Einströmkanal (40) gegenüberliegende Seitenwände (13, 14) aufweist, von denen eine erste (13) an dem Rotor (20) vorbeiläuft und die zweite Seitenwand (14) relativ zu der ersten Seitenwand (13) so geneigt ausgerichtet ist, dass sie in der Verlängerung (V) in einer Aufsicht den Rotor (20) in einem Bereich zwischen der Rotationsachse (22) und dem Außenumfang, insbesondere der radial außen liegenden Hälfte der Strecke zwischen Rotationsachse (22) und Außenumfang des Rotors (20) schneidet.

11. Strömungskonverter nach Anspruch 10, bei dem in der zweiten Seitenwand (14) wenigstens eine Öffnung zur Bildung einer Einströmöffnung (42) in den inneren Einströmkanal (41) ausgebildet ist und die zweite Seitenwand (14) den inneren Einströmkanal (41) in Radialrichtung nach Außen begrenzt sowie eine dritten Seitenwand (70) den Einströmkanal in Radialrichtung nach Innen begrenzt.

12. Strömungskonverter nach Anspruch 11, bei dem die dritte Seitenwand (70) in der Verlängerung (V) in einer Aufsicht die Rotationsachse (22) schneidet.

13. Strömungskonverter nach einem der vorstehenden Ansprüche, bei dem eine gerade Zahl an Rotoren (20) in dem Gehäuse (10) aufgenommen ist, denen jeweils ein separater Einströmkanal (15) zugeordnet ist, wobei die Rotoren (20) bevorzugt gegenläufig drehbar sind.

14. Strömungskonverter nach einem der vorstehenden Ansprüche, bei dem die Rotationsachse (22) zumindest eines Rotors (20) unmittelbar mit dem Läufer eines Generators, insbesondere eines Ringgenerators zusammenwirkt.

## Claims

1. Flow converter for energy generation comprising:
a housing (10); and
a rotor (20) which has a plurality of blades (23, 25, 31) which run in radial direction of the rotor (20); wherein the rotor (20) can be rotated about an axis of rotation (22),
**characterised in that** the housing (10) has an inflow channel (15) and the rotor (20) is accommodated to be rotatable in the housing (10) so that a fluid flow (F) from the inflow channel (15) with regard to the axis of rotation (22) only meets the drive side of the rotor (20), **characterised in that** the inflow channel (15) in radial direction of the rotor (20) is subdivided into an outer inflow channel (40) and an inner inflow channel (41) and the blades comprise several first blades (60) and distanced in radial direction thereto several second blades (25), wherein the fluid flow (F) from the inner inflow channel (41) can flow onto the first blades (60) and the fluid flow (F) from the outer inflow channel (40) can flow onto the second blades (25).

2. Flow converter according to claim 1, in which the first blades (60) are bound rigidly to the rotor (20).

3. Flow converter according to claim 1 or 2, in which the first blades (20) are wound spirally in axial direction of the rotor (20).

4. Flow converter according to one of the preceding claims, in which the fluid flow (F) from the outer inflow channel (40) with regard to the axis of rotation (22) can flow only on a section of the rotor (26) lying on the outside in radial direction.

5. Flow converter according to one of the preceding claims, in which the rotor (20) has a support (21) which can be rotated about the axis of rotation (22) and the second blades (25) can be pivoted to a limited extent relative to the support (21) about an axis (23, 24) parallel to the axis of rotation (22).

6. Flow converter according to one of the preceding claims 1 to 4, in which the rotor (20) has a support (21) which can be rotated about the axis of rotation (22) and the second blades are formed in each case from at least two individual blades (30) which can be pivoted to a limited extent in each case relative to the support (21) about an axis (32) parallel to the axis of rotation (22).

7. Flow converter according to claim 6, in which the individual blades (30) can be pivoted into an active position in which the blade surfaces of the individual blades (30) adjoin one another.

8. Flow converter according to one of claims 5 to 7, in which the blades (23, 25, 31) or the individual blades (30) thereof can be pivoted passively or actively.

9. Flow converter according to one of the preceding claims, in which the outer inflow channel (40) runs like a funnel from an inflow opening (16) to an outflow opening (17).

10. Flow converter according to one of the preceding claims, in which the outer inflow channel (40) has opposite side walls (13, 14), of which a first (13) runs past the rotor (20) and the second side wall (14) is aligned at an angle relative to the first side wall (13) so that in the extension (V) in a plan view it intersects the rotor (20) in a region between the axis of rotation (22) and the outer periphery, in particular half of the distance lying radially outwards between axis of rotation (22) and outer periphery of the rotor (20).

11. Flow converter according to claim 10, in which at least one opening for forming an inflow opening (42) in the inner inflow channel (41) is made in the second side wall (14) and the second side wall (14) limits the inner inflow channel (41) in radial direction outwards and a third side wall (70) limits the inflow channel in radial direction inwards.

12. Flow converter according to claim 11, in which the third side wall (70) in the extension (V) in a plan view intersects the axis of rotation (22).

13. Flow converter according to one of the preceding claims, in which an even number of rotors (20) are accommodated in the housing (10), to which in each case a separate inflow channel (15) is assigned, wherein the rotors (20) can be rotated preferably to be contrarotating.

14. Flow converter according to one of the preceding claims, in which the axis of rotation (22) of at least one rotor (20) cooperates directly with the rotor of a generator, in particular a ring generator.

## Revendications

1. Convertisseur de courant pour la récupération d'énergie, comprenant :
un boîtier (10) ; et
un rotor (20), qui présente une pluralité d'aubes (23, 25, 31), qui s'étendent dans le sens radial du rotor (20) ; dans lequel le rotor (20) est rotatif autour d'un axe de rotation (22), **caractérisé en ce que** le boîtier (10) présente un canal d'afflux (15) et le rotor (20) est reçu de manière rotative dans le boîtier (10), de sorte qu'un courant fluidique (F) du canal d'afflux (15) par rapport à l'axe de rotation (22) touche seulement le côté d'entraînement du rotor (20), **caractérisé en ce que** le canal d'afflux (15) est divisé dans le sens radial du rotor (20) en un canal d'afflux extérieur (40) et un canal d'afflux intérieur (41) et les aubes comportent plusieurs premières aubes (60) ainsi que plusieurs secondes aubes (25) espacées dans le sens radial par rapport à celles-ci, dans lequel le courant fluidique (F) peut s'écouler du canal d'afflux intérieur (41) sur les premières aubes (60) et le courant fluidique (F) du canal d'afflux extérieur (40) sur les secondes aubes (25).

2. Convertisseur de courant selon la revendication 1, dans lequel les premières aubes (60) sont rigidement liées au rotor (20).

3. Convertisseur de courant selon la revendication 1 ou 2, dans lequel les premières aubes (20) sont enroulées en spirale dans le sens axial du rotor (20).

4. Convertisseur de courant selon l'une quelconque des revendications précédentes, dans lequel le courant fluidique (F) peut s'écouler du canal d'afflux extérieur (40), par rapport à l'axe de rotation (22), seulement sur une section extérieure dans le sens radial du rotor (26).

5. Convertisseur de courant selon l'une quelconque des revendications précédentes, dans lequel le rotor (20) présente un support (21), qui est rotatif autour de l'axe de rotation (22) et les secondes aubes (25) sont pivotantes de manière limitée par rapport au support (21) autour d'un axe (23, 24) parallèlement à l'axe de rotation (22).

6. Convertisseur de courant selon l'une quelconque des revendications précédentes 1 à 4, dans lequel le rotor (20) présente un support (21), qui est rotatif autour de l'axe de rotation (22) et les secondes aubes sont formées respectivement d'au moins deux pales individuelles (30), qui peuvent être pivotées de manière limitée respectivement par rapport au support (21) autour d'un axe (32) parallèle à l'axe de rotation (22).

7. Convertisseur de courant selon la revendication 6, dans lequel les pales individuelles (30) sont pivotantes dans une position active, dans laquelle les surfaces de pale des pales individuelles (30) se raccordent les unes aux autres.

8. Convertisseur de courant selon l'une quelconque des revendications 5 à 7, dans lequel les aubes (23, 25, 31) ou leurs pales individuelles (30) sont pivotantes de manière passive ou active.

9. Convertisseur de courant selon l'une quelconque des revendications précédentes, dans lequel le canal d'afflux extérieur (40) s'étend depuis une ouverture d'afflux (16) à une ouverture de sortie (17) en forme d'entonnoir.

10. Convertisseur de courant selon l'une quelconque des revendications précédentes, dans lequel le canal d'afflux extérieur (40) présente des parois latérales (13, 14) opposées, dont une première (13) passe devant le rotor (20) et la seconde paroi latérale (14) est orientée inclinée par rapport à la première paroi latérale (13), de sorte qu'elle coupe, dans le prolongement (V) dans une vue de dessus, le rotor (20) dans une zone entre l'axe de rotation (22) et la périphérie extérieure, en particulier la moitié se trouvant radialement à l'extérieur du parcours entre l'axe de rotation (22) et la périphérie extérieure du rotor (20).

11. Convertisseur de courant selon la revendication 10, dans lequel dans la seconde paroi latérale (14), au moins une ouverture destinée à former une ouverture d'afflux (42) est réalisée dans le canal d'afflux intérieur (41) et la seconde paroi latérale (14) délimite le canal d'afflux intérieur (41) dans le sens radial vers l'extérieur, de même qu'une troisième paroi latérale (70) délimite le canal d'afflux dans le sens radial vers l'intérieur.

12. Convertisseur de courant selon la revendication 11, pour lequel la troisième paroi latérale (70) coupe l'axe de rotation (22) dans le prolongement (V) dans une vue en élévation.

13. Convertisseur de courant selon l'une quelconque des revendications précédentes, dans lequel un nombre pair de rotors (20) est reçu dans le boîtier (10), auxquels est associé respectivement un canal d'afflux (15) séparé, dans lequel les rotors (20) sont rotatifs de préférence en sens contraire.

14. Convertisseur de courant selon l'une quelconque des revendications précédentes, dans lequel l'axe de rotation (22) au moins d'un rotor (20) coagit directement avec le rotor d'un générateur, en particulier d'un générateur annulaire.
